# EUROPEAN PATENT SPECIFICATION

(11) **EP 3 437 381 B1**
(45) Date of publication and mention of the grant of the patent: **09.07.2025**
(21) Application number: 16897446.7
(22) Date of filing: 26.09.2016
(51) Int. Cl.: H04W 48/06, H04W 48/12

(54) **STAGGERING UNATTENDED TRAFFIC IN LTE AFTER BARRING**
STAFFELUNG VON UNBEAUFSICHTIGTEM VERKEHR IN LTE NACH SPERRUNG
ÉCHELONNEMENT D'UN TRAFIC SANS SURVEILLANCE DANS UN SYSTÈME D'ÉVOLUTION À LONG TERME (LTE) APRÈS UNE INTERDICTION

(30) Priority: 01.04.2016 US 201662316735 P
(43) Date of publication of application: 06.02.2019
(73) Proprietor: Apple Inc., Cupertino, CA 95014 (US)
(72) Inventor: PALAT, Sudeep K., Cheltenham GLS GL51 0GG (GB); HEO, Youn Hyoung, Seoul 11 150-705 (KR); CHOI, Hyung-Nam, 22117 Hamburg (DE); MARTINEZ TARRADELL, Marta, 80798 München (DE)
(74) Representative: Lang, Johannes
(86) International application number: PCT/US2016/053820
(87) International publication number: WO 2017/171921

(56) References cited:
- WO-A1-2014/051370
- WO-A2-2013/022298
- US-A1- 2012 039 171
- US-A1- 2013 242 735
- US-A1- 2014 171 061
- US-A1- 2015 036 489
- US-A1- 2015 289 195
- VERIZON ET AL: "Restricting Unattended/Background Data Traffic", vol. RAN WG2, no. Malmo, Sweden; 20151005 - 20151009, 4 October 2015 (2015-10-04), XP051040254, Retrieved from the Internet <URL:http://www.3gpp.org/ftp/Meetings_3GPP_SYNC/RAN2/Docs/> [retrieved on 20151004]
- "Email Discussion on Control of Unattended Traffic", vol. RAN WG2, no. Anaheim, CA, USA; 20151116 - 20151120, 16 November 2015 (2015-11-16), XP051040346, Retrieved from the Internet <URL:http://www.3gpp.org/ftp/Meetings_3GPP_SYNC/RAN2/Docs/> [retrieved on 20151116]
- VERIZON ET AL: "Access Restriction for Unattended Data Traffic", vol. TSG RAN, no. Malmo, Sweden; 20151005 - 20151009, 26 September 2015 (2015-09-26), XP051023771, Retrieved from the Internet <URL:http://www.3gpp.org/ftp/tsg_ran/WG2_RL2/TSGR2_91bis/Docs/> [retrieved on 20150926]
- HUAWEI ET AL: "Options for handling unattended data traffic", vol. RAN WG2, no. St. Julian; 20160215 - 20160219, 19 February 2016 (2016-02-19), XP051066186, Retrieved from the Internet <URL:http://www.3gpp.org/ftp/tsg_ran/WG2_RL2/TSGR2_93/Docs/> [retrieved on 20160219]
- VERIZON ET AL: "Restricting Unattended Data Traffic", vol. TSG RAN, no. Nanjing, China; 20160523 - 20160527, 10 June 2016 (2016-06-10), XP051659988, Retrieved from the Internet <URL:http://www.3gpp.org/ftp/tsg%5Fran/TSG%5FRAN/TSGR%5F72/Docs/RP%2D161080%2Ezip> [retrieved on 20160610]
- VERIZON ET AL: "Access Restriction for Unattended Data Traffic", vol. TSG RAN, no. Dubrovnik, Croatia; 20160411 - 20160415, 15 April 2016 (2016-04-15), XP051098933, Retrieved from the Internet <URL:http://www.3gpp.org/ftp/Meetings_3GPP_SYNC/RAN2/Docs/> [retrieved on 20160415]
- VERIZON: "Email Discussion on Control of Unattended Traffic", R2-156223, 3GPP TSG-RAN WG2 #92, 10 November 2015 (2015-11-10), Anaheim, CA , USA, XP051040346
- VERIZON ET AL.: "Restricting Unattended/Background Data Traffic", R2-154033, 3GPP TSG- RAN WG2 MEETING #91BIS, 26 September 2015 (2015-09-26), Malmo, Sweden, XP051040254

## Description

### TECHNICAL FIELD

Embodiments pertain to wireless communications. Some embodiments relate to wireless networks including 3GPP (Third Generation Partnership Project) networks, 3GPP LTE (Long Term Evolution) networks, 3GPP LTE-A (LTE Advanced) networks, and 5G networks, although the scope of the embodiments is not limited in this respect. Some embodiments relate to barring of unattended (or background) traffic in LTE.

### BACKGROUND

With the increase in different types of devices communicating with various network devices, usage of 3GPP LTE systems has increased. The penetration of mobile devices (user equipment or UEs) in modern society has continued to drive demand for a wide variety of networked devices in a number of disparate environments. The use of networked UEs using 3GPP LTE systems has increased in all areas of home and work life. Fifth generation (5G) wireless systems are forthcoming, and are expected to enable even greater speed, connectivity, and usability.

One concern with UEs is handling of unattended (or background) traffic. More specifically, when an Evolved Node-B (eNB) has allowed communication of background traffic after background traffic has been previously disallowed, all UEs in the eNB cell may initiate (or resume) communication of their background traffic at the same (or similar) time instant, which can result in cell traffic overload and reduction of data rates.
3GPP draft R2-154033 by Verizon et al., "Restricting Unattended/Background Data Traffic", October 4, 2015, provides some field studies on unattended/background data traffic. Based on the analysis of field results and existing mechanisms, the document proposes a possible enhancement to ensure the fulfilment of the requirement.
3GPP draft R2-156223, "Email Discussion on Control of Unattended Traffic", November 16, 2015, discloses various proposals for controlling of unattended traffic.
US 2014/171061 A1 discusses how the access of a UE configured for and activated to implement extended access barring, EAB, or included in a group of UEs addressed via group paging to a wireless communication network is controlled. First, an access delay for the UE is determined. Second, a timing of an attempt by the UE to access a cell in the wireless communication network is controlled based on the determined access delay.
The invention is defined by the independent claims. Preferred embodiments of the invention are stipulated in the dependent claims.

### BRIEF DESCRIPTION OF THE FIGURES

In the figures, which are not necessarily drawn to scale, like numerals may describe similar components in different views. Like numerals having different letter suffixes may represent different instances of similar components. Some embodiments are illustrated by way of example, and not limitation, in the following figures of the accompanying drawings.
FIG. 1A is a functional diagram of a 3GPP network in accordance with some embodiments.
FIG. 1B illustrates transmission of system information in subsequent modification periods.
FIG. 2 is a block diagram of a User Equipment (UE) in accordance with some embodiments.
FIG. 3 is a block diagram of an Evolved Node-B (eNB) in accordance with some embodiments.
FIG. 4 illustrates reception of a system information block (SIB) during a modification period, in accordance with some embodiments.
FIGS. 5A-5E illustrate example System_Information_Block_Type2 signaling, in accordance with some embodiments.
FIGS. 6-9 are flow diagrams illustrating example functionalities for solutions for staggering unattended data traffic after barring, in accordance with some embodiments.
FIG. 10 illustrates a block diagram of a communication device such as an eNB or a UE, in accordance with some embodiments.

### DETAILED DESCRIPTION

The following description and the drawings sufficiently illustrate specific embodiments to enable those skilled in the art to practice them. A number of examples are described in the context of 3GPP communication systems and components thereof. It will be understood that principles of the embodiments are applicable in other types of communication systems, such as Wi-Fi or Wi-Max networks, Bluetooth or other personal-area networks, Zigbee or other home-area networks, wireless mesh networks, and the like, without limitation, unless expressly limited by a corresponding claim. Given the benefit of the present disclosure, persons skilled in the relevant technologies will be able to engineer suitable variations to implement principles of the embodiments in other types of communication systems. Various diverse embodiments may incorporate structural, logical, electrical, process, and other differences. Portions and features of some embodiments may be included in, or substituted for, those of other embodiments.

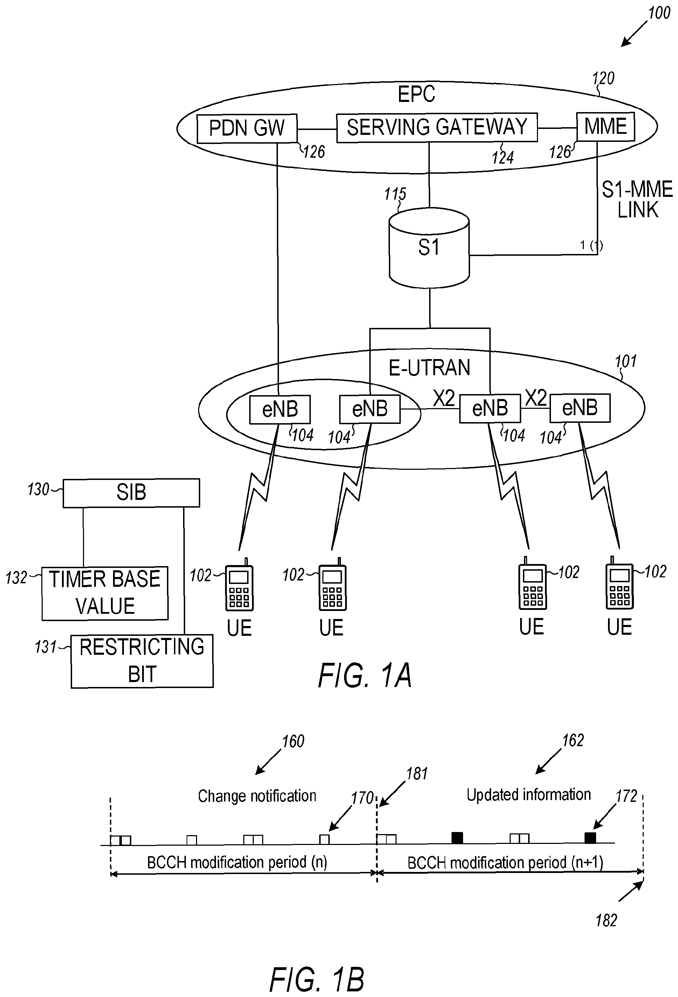

FIG. 1A shows an example of a portion of an end-to-end network architecture of a Long Term Evolution (LTE) network with various components of the network in accordance with some embodiments. As used herein, LTE and LTE-A networks and devices are referred to merely as LTE networks and devices. The network 100 may comprise a radio access network (RAN) (e.g., as depicted, the E-UTRAN or evolved universal terrestrial radio access network) 101 and the core network 120 (e.g., shown as an evolved packet core (EPC)) coupled together through an S1 interface 115. For convenience and brevity, only a portion of the core network 120, as well as the RAN 101, is shown in the example.

The core network 120 includes a mobility management entity (MME) 122, a serving gateway (serving GW) 124, and packet data network gateway (PDN GW) 126. The RAN 101 includes Evolved Node-B's (eNB) 104 (which may operate as base stations) for communicating with User Equipment (UE) 102. The eNBs 104 may include macro eNBs and low power (LP) eNBs, such as micro, pico or femto eNBs. In accordance with some embodiments, the eNB 104 may transmit a downlink control message to the UE 102 to indicate an allocation of physical uplink control channel (PUCCH) channel resources. The UE 102 may receive the downlink control message from the eNB 104, and may transmit an uplink control message to the eNB 104 in at least a portion of the PUCCH channel resources.

The MME 122 is similar in function to the control plane of legacy Serving GPRS Support Nodes (SGSN). The MME 122 manages mobility aspects in access such as gateway selection and tracking area list management. The serving GW 124 terminates the interface toward the RAN 101, and routes data packets between the RAN 101 and the core network 120. In addition, it may be a local mobility anchor point for inter-eNB handovers and also may provide an anchor for inter-3GPP mobility. Other responsibilities may include lawful intercept, charging, and some policy enforcement. The serving GW 124 and the MME 122 may be implemented in one physical node or separate physical nodes. The PDN GW 126 terminates a SGi interface toward the packet data network (PDN). The PDN GW 126 routes data packets between the EPC 120 and the external PDN, and may be a key node for policy enforcement and charging data collection. It may also provide an anchor point for mobility with non-LTE accesses. The external PDN can be any kind of IP network, as well as an IP Multimedia Subsystem (IMS) domain. The PDN GW 126 and the serving GW 124 may be implemented in one physical node or separated physical nodes.

The eNBs 104 (macro, micro, pico or femto) may terminate the air interface protocol and may be the first point of contact for a UE 102. At least some of the eNBs 104 may be in a cell 106, in which the eNBs 104 of the cell 106 may be controlled by the same processor or set of processors. In some embodiments, an eNB 104 may be in a single cell 106, while in other embodiments the eNB 104 may be a member of multiple cells 106. In some embodiments, an eNB 104 may fulfill various logical functions for the RAN 101 including but not limited to RNC (radio network controller functions) such as radio bearer management, uplink and downlink dynamic radio resource management and data packet scheduling, and mobility management. In accordance with embodiments, UEs 102 may be configured to communicate Orthogonal frequency-division multiplexing (OFDM) communication signals with an eNB 104 over a multicarrier communication channel in accordance with an OFDMA communication technique. The OFDM signals may comprise a plurality of orthogonal subcarriers. Each of the eNBs 104 may be able to transmit a reconfiguration message to each UE 102 that is connected to that eNB 104. The reconfiguration message may contain reconfiguration information including one or more parameters that indicate specifics about reconfiguration of the UE 102 upon a mobility scenario (e.g., handover) to reduce the latency involved in the handover. The parameters may include physical layer and layer 2 reconfiguration indicators, and a security key update indicator. The parameters may be used to instruct the UE 102 to avoid or skip one or more of the processes indicated to decrease messaging between the UE 102 and the network. The network may be able to automatically route packet data between the UE 102 and the new eNB 104 and may be able to provide the desired information between the eNBs 104 involved in the mobility. The application, however, is not limited to this, however, and additional embodiments are described in more detail below.

In an example, the UE operating system may designate certain data traffic as background (or unattended) data traffic. As used herein, the terms "background traffic" and "unattended traffic" are interchangeable and refer to one or more types of data traffic that are, e.g., associated with a UE in a background mode and/or the data packets have low QoS requirements, and/or the data packet has small packet size with long packet inter-arrival time.

In an example, the eNB 104 may implement a barring mechanism for unattended data traffic. For example, the eNB can introduce a restricting bit 131 within a system information block (SIB) 130 to inform the UE that the unattended traffic is barred. In this regard the restricting bit can be used as an unattended traffic barring indication, which can be communicated to one or more UEs in the eNB cell (i.e., the bit is common for all UEs in the cell). When the eNB removes the restricting bit (e.g., changes status of bit from TRUE to FALSE), then the UEs within the cell can again send unattended traffic.

In an example, the eNB 104 may be configured to determine based on amount of radio resource control (RRC) configuration messaging received at the eNB, to bar unattended data traffic from the UE. The eNB 104 may update a System Information Block (SIB) information element (IE) to include a restricting bit, the restricting bit indicating that the unattended data traffic is barred. The eNB 104 may encode the SIB IE for transmission to the UE during a modification period. The eNB may encode the SIB IE for multiple transmissions to the UE during the modification period. The eNB 104 may determine (e.g., based on an algorithm at the eNB) to stop barring the unattended data traffic from the UE, and update the restricting bit in the SIB IE to indicate that the unattended data traffic is no longer barred. Other considerations that may be used by the eNB 104 in determining to stop barring may include a number of resource blocks that are used (or free) over a period of time, the amount of buffered data, and so forth.

FIG. 1B illustrates transmission of system information in subsequent modification periods. Referring to FIG. 1B, there are illustrated two modification periods 160 and 162. Change of system information may occur during the subsequent modification periods. For example, system information (e.g., 170) can be transmitted a number of times during the modification period 160, as defined by its scheduling. In some instances, system information block (SIB) can be transmitted only once (and in other instances more than once) during the modification period. When system information (e.g., 170) changes, the network transmits the updated system information (e.g., 172) during the subsequent modification period (e.g., 162).

In an example, the SIB changes can be read by the UEs 102 periodically during a modification period time interval (e.g., 162), and can act on it at the modification period boundary (e.g., 181, 182). In this regard, all UEs 102 within the eNB cell can read and act on the SIB indication at the same instant in time. Consequently, when the restricting bit is removed, the UEs that have accumulated background data while it was barred, may try to access the cell network at the same time instant (e.g., immediately after the barring is removed), which can cause surge in traffic. LTE Access class barring allows barring of fractional number of users. This fraction can be changed by the network over time and can be used to avoid the issue discussed here. For example, during alleviation of barring, network can gradually reduce the fraction of users that is barred, thereby avoiding the surge that can happen when the barring is suddenly removed. However, for barring background traffic, only a single barring bit is used and the barring of a fraction of traffic or users is not possible.

In another example, the eNB can temporarily restrict (or bar) all data traffic immediately after removal of the restricting bit. For example, after background traffic has been restricted (restricting bit has been set), background traffic can be allowed by removing/clearing the restricting bit. After the restricting bit has been cleared (and background traffic is allowed), a random timer may be initiated for a random duration. After the random timer has expired, background traffic communication may resume. This solution, however, may result in barring of normal traffic during the transition period.

Another solution to address potential data traffic surge after removal of a restricting bit is to have UEs 102 act on the removal of barring bit immediately after reading the bit rather than at the SIB change boundary (i.e., at the boundary of the modification period). Since different UEs are likely to read the bit at different times, this will result in a natural distribution of released unattended data traffic from the UEs. However, checking for a removal of a restricting bit in each received SIB may be power-intense as the SIB can be received multiple times within a modification period.

In an example, after the UE 102 receives a SIB 130, the UE 102 can detect a change in the restricting bit status (e.g., removal of the restriction of unattended traffic indicated by change of the bit status from TRUE to FALSE). After the UE detects a change in the restricting bit 131 status from barring/restricting unattended data traffic (i.e., TRUE status/state) to non-restricting of unattended data traffic (i.e., FALSE status/state), the UE 102 can use a random timer after the SIB modification period boundary, and continues to restrict unattended data traffic until the timer expires. Unattended data traffic can be resumed after expiration of the timer. In another example, the UE may read the SIB at another time instance and not at a modification period boundary (for example when the UE comes back from out of coverage). In this instance, the timer may be applied when the SIB is read (not necessarily at the modification period boundary).

In another example, the UE can start a random timer when there is background data to send and the restricting bit is set (i.e., TRUE status/state). If the restricting bit 131 was already cleared in the previous modification period (e.g., the bit is not set at the modification period boundary just prior to the timer expiry), then the UE 102 is allowed to access the cell with unattended data traffic when the timer expires. Other examples of handling unattended data traffic are disclosed herein below.

In an example, the SIB 130 may also include a timer base value 132. The timer base value 132 can be used by the UE 102 as a base value in configuring the duration of the random timer.

The S1 interface 115 is the interface that separates the RAN 101 and the EPC 120. It is split into two parts: the S1-U, which carries traffic data between the eNB 104 and the serving GW 124, and the S1-MME, which is a signaling interface between the eNB 104 and the MME 122. The X2 interface is the interface between eNB 104. The X2 interface comprises two parts, the X2-C and X2-U. The X2-C is the control plane interface between the eNB 104, while the X2-U is the user plane interface between the eNB 104.

With cellular networks, Low Power (LP) cells are typically used to extend coverage to indoor areas where outdoor signals do not reach well, or to add network capacity in areas with very dense phone usage, such as train stations. As used herein, the term low power (LP) eNB refers to any suitable relatively low power eNB for implementing a narrower cell (narrower than a macro cell) such as a femtocell, a picocell, or a micro cell. Femtocell eNBs are typically provided by a mobile network operator to its residential or enterprise customers. A femtocell is typically the size of a residential gateway or smaller and generally connects to the user's broadband line. Once plugged in, the femtocell connects to the mobile operator's mobile network and provides extra coverage in a range of typically 30 to 50 meters for residential femtocells. Thus, a LP eNB might be a femtocell eNB since it is coupled through the PDN GW 126. Similarly, a picocell is a wireless communication system typically covering a small area, such as in-building (offices, shopping malls, train stations, etc.), or more recently in-aircraft. A picocell eNB can generally connect through the X2 link to another eNB such as a macro eNB through its base station controller (BSC) functionality. Thus, LP eNB may be implemented with a picocell eNB since it is coupled to a macro eNB via an X2 interface. Picocell eNBs or other LP eNBs may incorporate some or all functionality of a macro eNB. In some cases, this may be referred to as an access point base station or enterprise femtocell.

Communication over an LTE network may be split up into 10ms frames, each of which contains ten 1ms subframes. Each subframe, in turn, may contain two slots of 0.5ms. Each slot may contain 6-7 symbols, depending on the system used. A resource block (RB) (also called physical resource block (PRB)) may be the smallest unit of resources that can be allocated to a UE. A resource block may be 180 kHz wide in frequency and 1 slot long in time. In frequency, resource blocks may be either 12 x 15 kHz subcarriers or 24 x 7.5 kHz subcarriers wide. For most channels and signals, 12 subcarriers may be used per resource block. In Frequency Division Duplexed (FDD) mode, both the uplink and downlink frames may be 10ms and may be frequency (full-duplex) or time (half-duplex) separated. In Time Division Duplexed (TDD), the uplink and downlink subframes may be transmitted on the same frequency and may be multiplexed in the time domain. A downlink resource grid may be used for downlink transmissions from an eNB to a UE. The grid may be a time-frequency grid, which is the physical resource in the downlink in each slot. Each column and each row of the resource grid may correspond to one OFDM symbol and one OFDM subcarrier, respectively. The duration of the resource grid in the time domain may correspond to one slot. The smallest time-frequency unit in a resource grid may be denoted as a resource element. Each resource grid may comprise a number of the above resource blocks, which describe the mapping of certain physical channels to resource elements. Each resource block may comprise 12 (subcarriers) *14 (symbols) =168 resource elements.

In some embodiments, a downlink resource grid may be used for downlink transmissions from an eNB 104 to a UE 102, while uplink transmission from the UE 102 to the eNB 104 may utilize similar techniques. The grid may be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid correspond to one OFDM symbol and one OFDM subcarrier, respectively. The duration of the resource grid in the time domain corresponds to one slot in a radio frame. The smallest time-frequency unit in a resource grid is denoted as a resource element (RE). Each resource grid comprises a number of resource blocks (RBs), which describe the mapping of certain physical channels to resource elements. Each resource block comprises a collection of resource elements in the frequency domain and may represent the smallest quanta of resources that currently can be allocated. There are several different physical downlink channels that are conveyed using such resource blocks. Two example physical downlink channels are the physical downlink shared channel and the physical down link control channel.

There may be several different physical downlink channels that are conveyed using such resource blocks. Two of these physical downlink channels may be the physical down link control channel (PDCCH) and the physical downlink shared channel (PDSCH). Each subframe may be partitioned into the PDCCH and the PDSCH.

The physical downlink shared channel (PDSCH) carries user data and higher-layer signaling to a UE 102 (FIG. 1A). The physical downlink control channel (PDCCH) carries information about the transport format and resource allocations related to the PDSCH channel, among other things. It also informs the UE 102 about the transport format, resource allocation, and hybrid automatic repeat request (HARQ) information related to the uplink shared channel. Typically, downlink scheduling (e.g., assigning control and shared channel resource blocks to UE 102 within a cell) may be performed at the eNB 104 based on channel quality information fed back from the UE 102 to the eNB 104, and then the downlink resource assignment information may be sent to the UE 102 on the control channel (PDCCH) used for (assigned to) the UE 102.

The PDCCH uses CCEs (control channel elements) to convey the control information. Before being mapped to resource elements, the PDCCH complex-valued symbols are first organized into quadruplets, which are then permuted using a sub-block inter-leaver for rate matching. Each PDCCH is transmitted using one or more of these control channel elements (CCEs), where each CCE corresponds to nine sets of four physical resource elements known as resource element groups (REGs). Four QPSK symbols are mapped to each REG. The PDCCH can be transmitted using one or more CCEs, depending on the size of downlink control information (DCI) and the channel condition. There may be four or more different PDCCH formats defined in LTE with different numbers of CCEs (e.g., aggregation level, L=1, 2, 4, or 8).

As used herein, the term circuitry may refer to, be part of, or include an Application Specific Integrated Circuit (ASIC), an electronic circuit, a processor (shared, dedicated, or group), or memory (shared, dedicated, or group) that executes one or more software or firmware programs, a combinational logic circuit, or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware. Embodiments described herein may be implemented into a system using any suitably configured hardware or software.

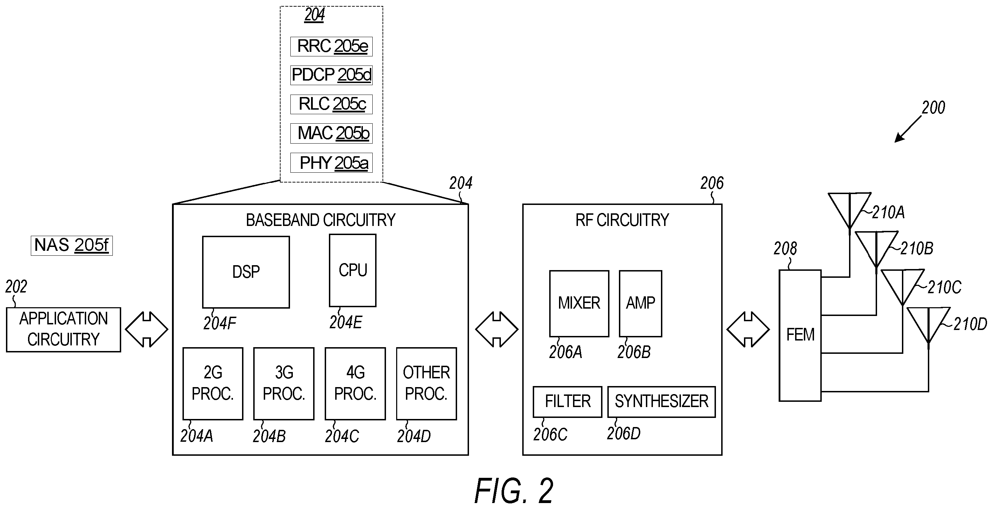

FIG. 2 is a functional diagram of a User Equipment (UE) in accordance with some embodiments. The UE 200 may be suitable for use as a UE 102 as depicted in FIG. 1A. In some embodiments, the UE 200 may include application circuitry 202, baseband circuitry 204, Radio Frequency (RF) circuitry 206, front-end module (FEM) circuitry 208, and multiple antennas 210A-210D, coupled together at least as shown. In some embodiments, other circuitry or arrangements may include one or more elements or components of the application circuitry 202, the baseband circuitry 204, the RF circuitry 206 or the FEM circuitry 208, and may also include other elements or components in some cases. As an example, "processing circuitry" may include one or more elements or components, some or all of which may be included in the application circuitry 202 or the baseband circuitry 204. As another example, "transceiver circuitry" may include one or more elements or components, some or all of which may be included in the RF circuitry 206 or the FEM circuitry 208. These examples are not limiting, however, as the processing circuitry or the transceiver circuitry may also include other elements or components in some cases.

The application circuitry 202 may include one or more application processors. For example, the application circuitry 202 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the system to perform one or more of the functionalities described herein.

The baseband circuitry 204 may include circuitry such as, but not limited to, one or more single-core or multi-core processors. The baseband circuitry 204 may include one or more baseband processors or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a second generation (2G) baseband processor 204a, third generation (3G) baseband processor 204b, fourth generation (4G) baseband processor 204c, or other baseband processor(s) 204d for other existing generations, generations in development or to be developed in the future (e.g., fifth generation (5G), 6G, etc.). The baseband circuitry 204 (e.g., one or more of baseband processors 204a-d) may handle various radio control functions that enable communication with one or more radio networks via the RF circuitry 206. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, or constellation mapping/demapping functionality. In some embodiments, encoding/decoding circuitry of the baseband circuitry 204 may include Low Density Parity Check (LDPC) encoder/decoder functionality, optionally along-side other techniques such as, for example, block codes, convolutional codes, turbo codes, or the like, which may be used to support legacy protocols. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (EUTRAN) protocol including, for example, physical (PHY) 205a, media access control (MAC) 205b, radio link control (RLC) 205c, packet data convergence protocol (PDCP) 205d, and/or radio resource control (RRC) 205e elements. Additionally, the UE 200 may further include network attached storage 205f.

A central processing unit (CPU) 204e of the baseband circuitry 204 may be configured to run elements of the protocol stack for signaling of the PHY, MAC, RLC, PDCP or RRC layers. In some embodiments, the baseband circuitry may include one or more audio digital signal processor(s) (DSP) 204f. The audio DSP(s) 204f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include a receive signal path which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the RF circuitry 206 may include a receive signal path and a transmit signal path. The receive signal path of the RF circuitry 206 may include mixer circuitry 206a, amplifier circuitry 206b and filter circuitry 206c. The transmit signal path of the RF circuitry 206 may include filter circuitry 206c and mixer circuitry 206a. RF circuitry 206 may also include synthesizer circuitry 206d for synthesizing a frequency for use by the mixer circuitry 206a of the receive signal path and the transmit signal path. In some embodiments, the mixer circuitry 206a of the receive signal path may be configured to down-convert RF signals received from the FEM circuitry 208 based on the synthesized frequency provided by synthesizer circuitry 206d. The amplifier circuitry 206b may be configured to amplify the down-converted signals and the filter circuitry 206c may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be zero-frequency baseband signals, although this is not a requirement. In some embodiments, mixer circuitry 206a of the receive signal path may comprise passive mixers, although the scope of the embodiments is not limited in this respect. In some embodiments, the mixer circuitry 206a of the transmit signal path may be configured to up-convert input baseband signals based on the synthesized frequency provided by the synthesizer circuitry 206d to generate RF output signals for the FEM circuitry 208. The baseband signals may be provided by the baseband circuitry 204 and may be filtered by filter circuitry 206c. The filter circuitry 206c may include a low-pass filter (LPF), although the scope of the embodiments is not limited in this respect.

In some embodiments, the mixer circuitry 206a of the receive signal path and the mixer circuitry 206a of the transmit signal path may include two or more mixers and may be arranged for quadrature downconversion or upconversion respectively. In some embodiments, the mixer circuitry 206a of the receive signal path and the mixer circuitry 206a of the transmit signal path may include two or more mixers and may be arranged for image rejection (e.g., Hartley image rejection). In some embodiments, the mixer circuitry 206a of the receive signal path and the mixer circuitry 206a may be arranged for direct downconversion or direct upconversion, respectively. In some embodiments, the mixer circuitry 206a of the receive signal path and the mixer circuitry 206a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) and digital-to-analog converter (DAC) circuitry and the baseband circuitry 204 may include a digital baseband interface to communicate with the RF circuitry 206. In some dual-mode embodiments, a separate radio IC circuitry may be provided for processing signals for each spectrum, although the scope of the embodiments is not limited in this respect.

In some embodiments, the synthesizer circuitry 206d may be a fractional-N synthesizer or a fractional N/N+1 synthesizer, although the scope of the embodiments is not limited in this respect as other types of frequency synthesizers may be suitable. For example, synthesizer circuitry 206d may be a delta-sigma synthesizer, a frequency multiplier, or a synthesizer comprising a phase-locked loop with a frequency divider. The synthesizer circuitry 206d may be configured to synthesize an output frequency for use by the mixer circuitry 206a of the RF circuitry 206 based on a frequency input and a divider control input. In some embodiments, the synthesizer circuitry 206d may be a fractional N/N+1 synthesizer. In some embodiments, frequency input may be provided by a voltage controlled oscillator (VCO), although that is not a requirement. Divider control input may be provided by either the baseband circuitry 204 or the applications processor 202 depending on the desired output frequency. In some embodiments, a divider control input (e.g., N) may be determined from a look-up table based on a channel indicated by the applications processor 202.

Synthesizer circuitry 206d of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 206d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 206 may include an IQ/polar converter.

FEM circuitry 208 may include a receive signal path, which may include circuitry configured to operate on RF signals received from one or more of the antennas 210A-D, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210A-D.

In some embodiments, the FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210. In some embodiments, the UE 200 may include additional elements such as, for example, memory/storage, display, camera, sensor, or input/output (I/O) interface.

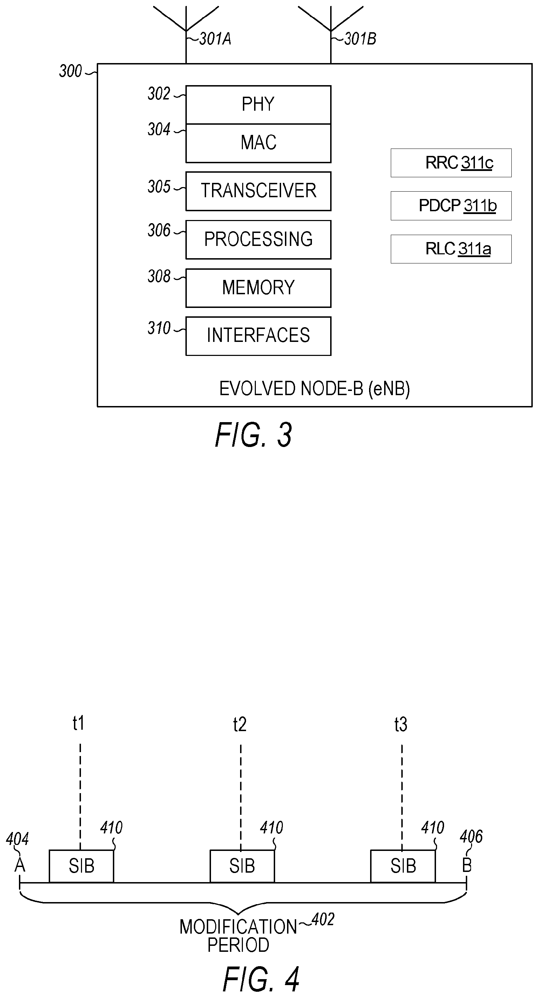

FIG. 3 is a functional diagram of an Evolved Node-B (eNB) in accordance with some embodiments. It should be noted that in some embodiments, the eNB 300 may be a stationary non-mobile device. The eNB 300 may be suitable for use as an eNB 104 as depicted in FIG. 1A. The components of eNB 300 may be included in a single device or a plurality of devices. The eNB 300 may include physical layer (PHY) circuitry 302 and a transceiver 305, one or both of which may enable transmission and reception of signals to and from the UE 200, other eNBs, other UEs or other devices using one or more antennas 301A-B. As an example, the physical layer circuitry 302 may perform various encoding and decoding functions that may include formation of baseband signals for transmission and decoding of received signals. For example, physical layer circuitry 302 may include LDPC encoder/decoder functionality, optionally along-side other techniques such as, for example, block codes, convolutional codes, turbo codes, or the like, which may be used to support legacy protocols. Embodiments of modulation/demodulation and encoder/decoder functionality are not limited to these examples and may include other suitable functionality in other embodiments. As another example, the transceiver 305 may perform various transmission and reception functions such as conversion of signals between a baseband range and a Radio Frequency (RF) range. Accordingly, the physical layer circuitry 302 and the transceiver 305 may be separate components or may be part of a combined component. In addition, some of the described functionality related to transmission and reception of signals may be performed by a combination that may include one, any or all of the physical layer circuitry 302, the transceiver 305, and other components or layers. The eNB 300 may also include medium access control layer (MAC) circuitry 304 for controlling access to the wireless medium. The eNB 300 may also include processing circuitry 306 and memory 308 arranged to perform the operations described herein. The eNB 300 may also include one or more interfaces 310, which may enable communication with other components, including other eNB 104 (FIG. 1A), components in the EPC 120 (FIG. 1A) or other network components. In addition, the interfaces 310 may enable communication with other components that may not be shown in FIG. 1A, including components external to the network. The interfaces 310 may be wired or wireless or a combination thereof.

In an example, the eNB 300 may further include radio link control (RLC) 311a, packet data convergence protocol (PDCP) 311b, and/or radio resource control (RRC) 311c elements.

The antennas 210A-D (in the UE) and 301A-B (in the eNB) may comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas 210A-D, 301A-B may be effectively separated to take advantage of spatial diversity and the different channel characteristics that may result.

In some embodiments, the UE 200 or the eNB 300 may be a mobile device and may be a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a wearable device such as a medical device (e.g., a heart rate monitor, a blood pressure monitor, etc.), or other device that may receive or transmit information wirelessly. In some embodiments, the UE 200 or eNB 300 may be configured to operate in accordance with 3GPP standards (e.g., 3G, 4G, 5G or another standard), although the scope of the embodiments is not limited in this respect. Mobile devices or other devices in some embodiments may be configured to operate according to other protocols or standards, including IEEE 802.11 or other IEEE standards. In some embodiments, the UE 200, eNB 300 or other device may include one or more of a keyboard, a display, a non-volatile memory port, multiple antennas, a graphics processor, an application processor, speakers, and other mobile device elements. The display may be an LCD screen including a touch screen.

Although the UE 200 and the eNB 300 are each illustrated as having several separate functional elements, one or more of the functional elements may be combined and may be implemented by combinations of software-configured elements, such as processing elements including digital signal processors (DSPs), or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

It should be noted that in some embodiments, an apparatus used by the UE 200 or eNB 300 may include various components of the UE 200 or the eNB 300 as shown in FIG. 2 and FIG. 3. Accordingly, techniques and operations described herein that refer to the UE 200 (or 102) may be applicable to an apparatus for a UE. In addition, techniques and operations described herein that refer to the eNB 300 (or 104) may be applicable to an apparatus for an eNB.

FIG. 4 illustrates reception of a system information block (SIB) during a modification period, in accordance with some embodiments. Additional modification period structure is illustrated in reference to FIG. 1B and corresponding description herein above. Referring to FIG. 4, there is illustrated a modification period 402, during which the eNB 104 can transmit system information to the UE 102. In an example, the system information can include a system information block (SIB) 410. The SIB 410 can include cell access related information, information for cell selection, scheduling information, radio resource configuration information, as well as other system information. In an example, the SIB 410 can be a System Information Block - Type 2, which can include radio resource configuration information that is common for all UEs 102 within the cell of the eNB 104.

In an example, the SIB 410 can include a restricting bit, such as the restricting bit 131 in SIB 130. Additionally, the SIB 410 can be broadcast by the eNB 104 (and received by the UE 102) a number of times within the modification period 402. For example, and as seen in FIG. 4, the SIB 410 is transmitted three times during the modification period 402, at times t1, t2, and t3.

The modification period can have a beginning time A 404 and an end time (or boundary) B 406. During the modification period, the SIB 410 can be the same or some portions of the SIB 410 can be modified between the multiple transmissions within the period 402. For example, the status of the restricting bit 131 can stay the same (e.g., TRUE or FALSE) throughout the period 402, or it may change. The UE 102 can receive the multiple transmissions of the SIB 410, and can act on the restricting bit 131 at the expiration of the modification period (e.g., at the boundary 406).

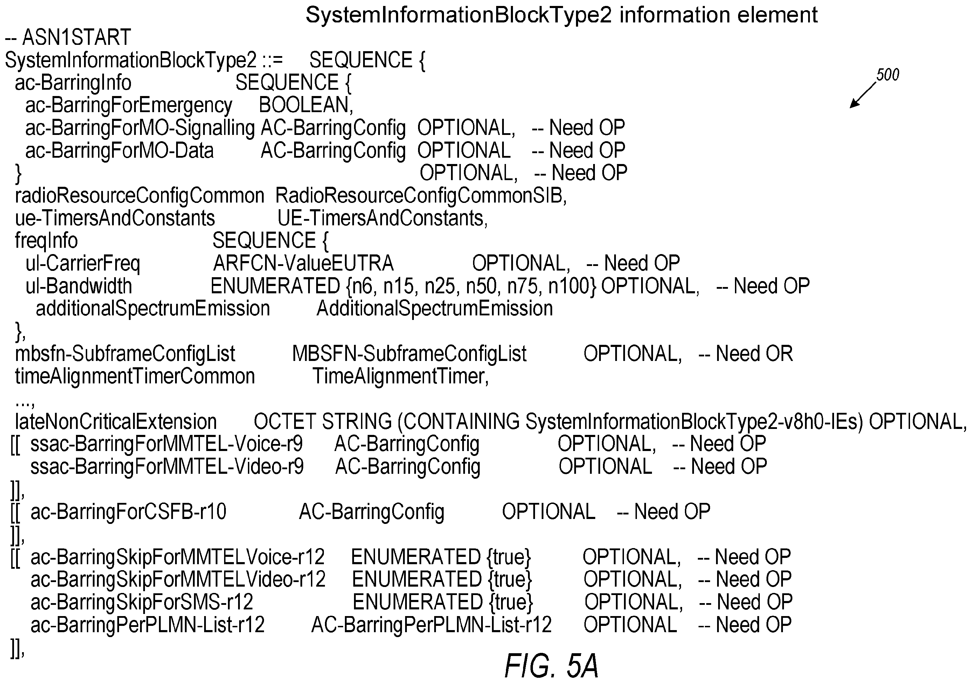

FIGS. 5A-5E illustrate example System_Information_Block_Type2 signaling, in accordance with some embodiments. Referring to FIGS. 5A-5E, there is illustrated a System Information Block - Type 2 (SIB-2) information element 500. The SIB-2 can include a restricting bit 502 and a timer base value 504. The restricting bit 502 may be similar to the restricting bit 131, and the timer base value 504 can be similar to the timer base value 132.

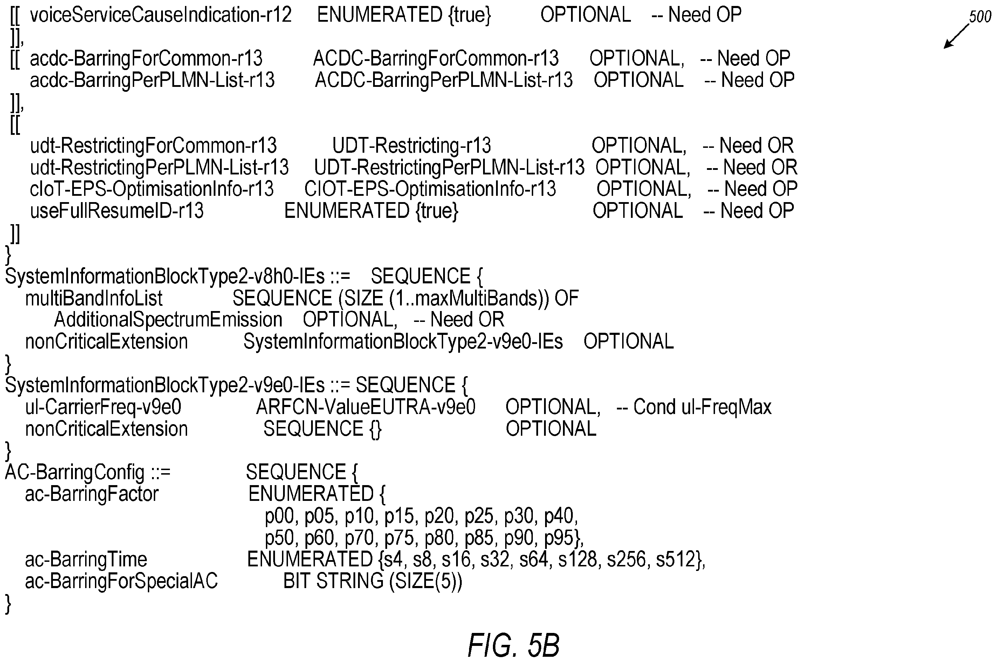

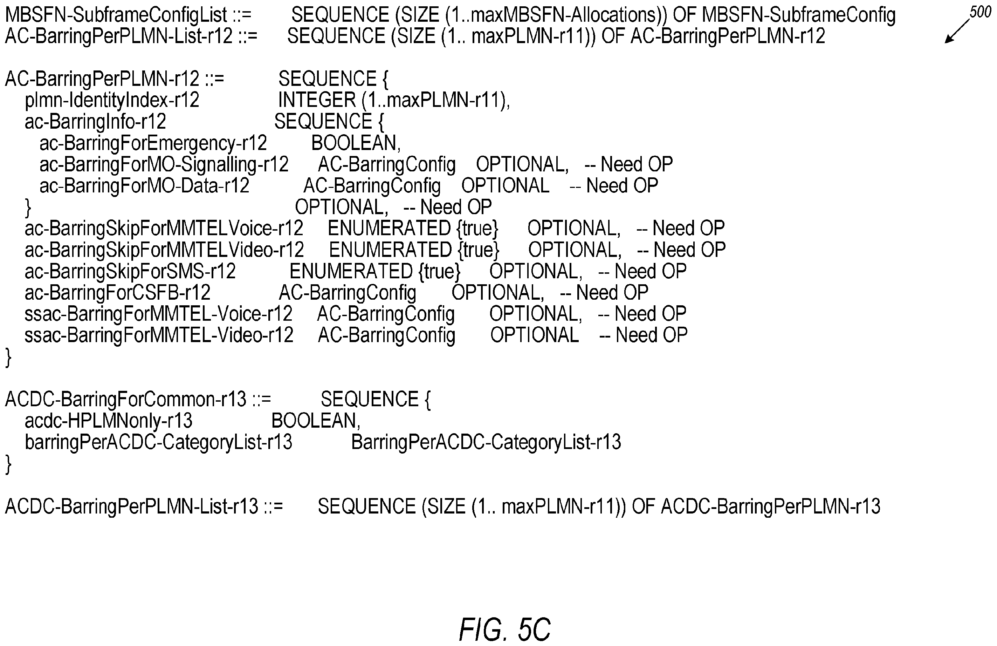

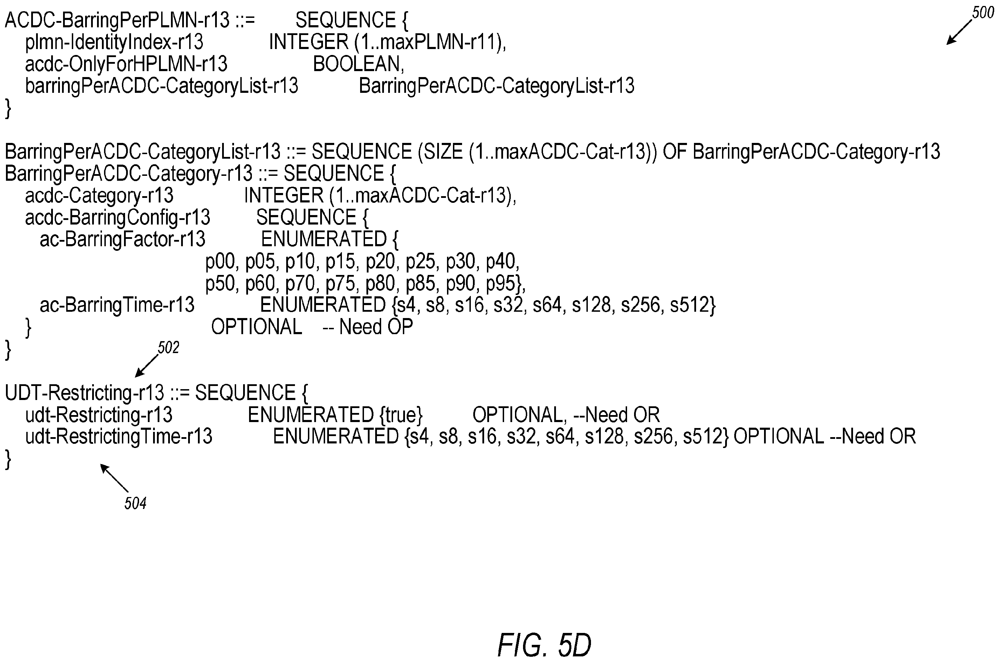

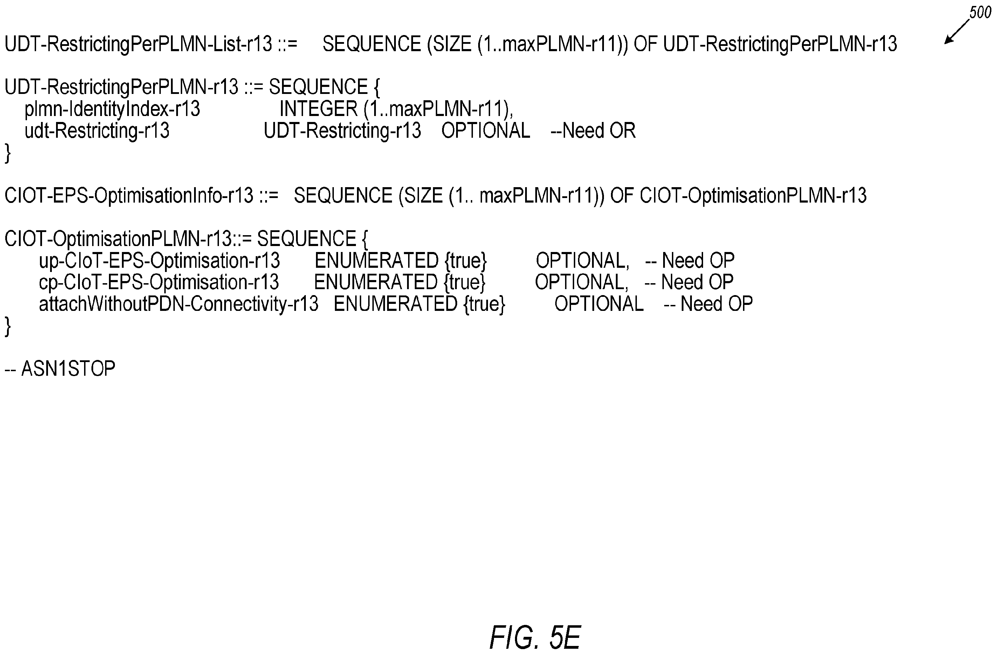

In an example, the restricting bit 502 can be an unattended data traffic (udt) restricting bit, which is designated as udt-Restricting in FIG. 5. A restricting bit value of TRUE indicates to the UE to restrict unattended data traffic. For example, the UE can indicate to a higher layer (e.g., operating system layer or an application layer) to restrict the unattended data traffic. should indicate to the higher layers to restrict unattended data traffic.

In an example, the timer base value 504 can be an unattended data traffic (udt) RestrictingTime value, as illustrated in FIG. 5. If present and when the udt-Restricting changes from TRUE to FALSE, the UE can run a random timer for a period equal to, e.g., (rand * udt-RestrictingTime) seconds, where rand can be a random number drawn that is uniformly distributed in the range 0 ≤ rand < 1. In instances when udt-Restricting bit 502 changes to TRUE, the random timer can stop (or expire). Upon timer expiry, the UE may indicates to the higher layers that the restriction on unattended data traffic is alleviated.

Even though FIG. 5 illustrates the SIB-2 information element as using designations of udt-Restricting and udt-RestrictingTime for the restricting bit and the timer base value, the disclosure is not limited in this regard and other designations may be used as well. For example, in other instances udt-Barring and udt-BarringTime may be used instead. As used herein, the terms "restricting" and "barring" are used interchangeably.

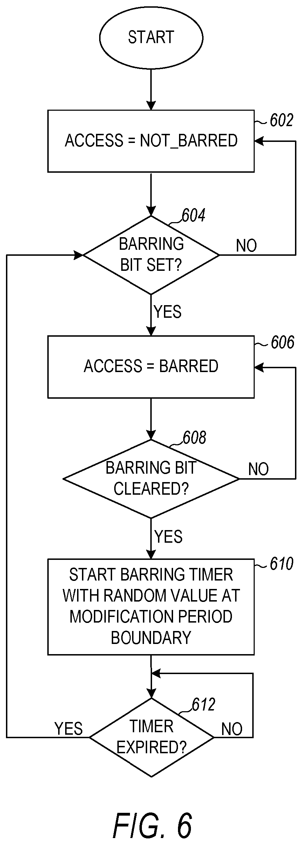

FIGS. 6-9 are flow diagrams illustrating example functionalities for solutions for staggering unattended data traffic after barring, in accordance with some embodiments. Referring to FIG. 1A and FIG. 6, at 602, the UE 102 can communicate any kind of data traffic to the eNB 104 as access to the eNB is not barred. As the UE 102 receives SIBs (e.g., 410) during a modification period (e.g., 402), the UE 102 can monitor status of the restricting bit 131. The UE 102 may process the SIB at the modification period boundary, and detect the status of the restricting bit at that time. If the restricting bit is not set, then communication of unattended data traffic to the eNB may continue. If the restricting bit 131 is set (i.e., it has a value of TRUE indicating unattended data traffic is to be restricted), then at 606, the UE 102 restricts communication of unattended data traffic. Such restriction may take place at the end of the modification period (e.g., boundary 406). At 608, it may be determined (e.g., after the UE receives a new SIB and reads it at the modification period boundary) whether the restricting bit 131 has been cleared (e.g., the status has changed from TRUE to FALSE, or from restricting to non-restricting). If the bit has not cleared, then processing resumes at 606, when unattended data traffic is still barred. If the bit has cleared, then processing resumes at 610.

At 610, the UE 102 can start a random timer when it is detected that the restricting bit status has changed to non-restricting. By default, the UE 102 reads the SIB 130 at the modification period boundary and, therefore, the barring removal is identified by the UE at the modification period boundary. The UE 102 may then access the eNB cell with unattended data traffic (and/or any other type of data traffic) when the timer expires. The timer value (e.g., the timer duration) may be randomly chosen and may be based on the timer base value 132 that is broadcast with the SIB 130. Since different UEs may select different random values, each UE may be allowed to access the cell at different times, thereby distributing the load to the eNB and reducing the potential for data overload.

In an example, the timer base value of the random timer may be provided in the SIB, as illustrated in FIG. 1A. In another example, the timer base value may be specified in a wireless standard (i.e., be pre-determined and known to all UEs) rather than being broadcast by the eNB. In yet another example, the timer base value may be determined by the UE. In yet another example, the timer base value (or the random timer altogether) may be handled or provided by the higher layers, such as, operating system layer, application, connection manager, and so forth.

Alternatively, the barring timer may be set differently in instances when there is certain granularity within the background applications or categorizations of data traffic within the UE. For example, instead of treating all background traffic the same, certain classification may be implemented which may allow for setting of different barring rules. For example, different restricting bits can be defined and used within the SIB, where each restricting bit can be associated with a different type of unattended data traffic. Example types of background/unattended data traffic may include higher priority traffic (e.g., synchronization of news, work/personal email or shared notes) and lower priority traffic (e.g., synchronization of social media/network applications, discussion forums, or maps).

At 612, it may be determined whether the random timer has expired. If the random timer has expired, processing may resume at 604, when it may be determined again whether the restricting bit is set.

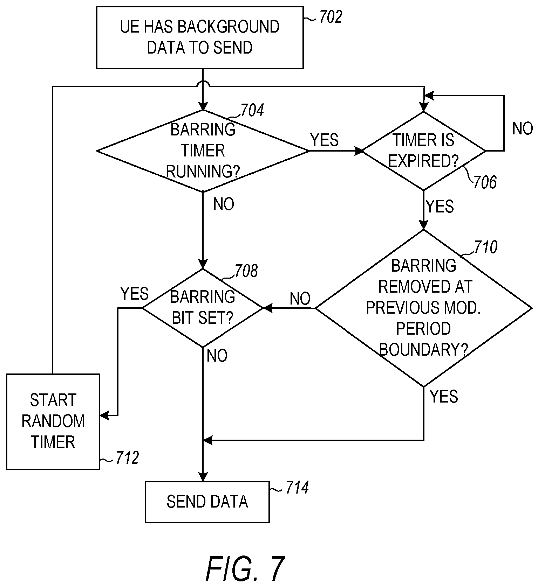

Referring to FIG. 1A and FIG. 7, the example method illustrated may start at 702, when it may be determined that the UE 102 has unattended data traffic to send. At 704, it may be determined whether a barring (random) timer is already running. If no timer is running, at 708, it may be determined whether the barring/restricting bit 131 is set (i.e., unattended traffic is being barred/restricted). If the bit is set, then at 712, a random timer may be started, and if it is not set, then unattended data may be communicated at 714. If the random timer has started at 712 (or if the timer is already running), then processing may continue at 706. At 706, it may be determined whether the timer has expired. If it has expired, then processing may continue at 710, when it may be determined whether the restricting of unattended data traffic has been removed at a previous modification period boundary. If restricting has not been removed, then processing may continue at 708. If the restricting has been removed (i.e., the restricting bit is set to FALSE), then processing may continue at 714 when unattended data may be sent out to the eNB.

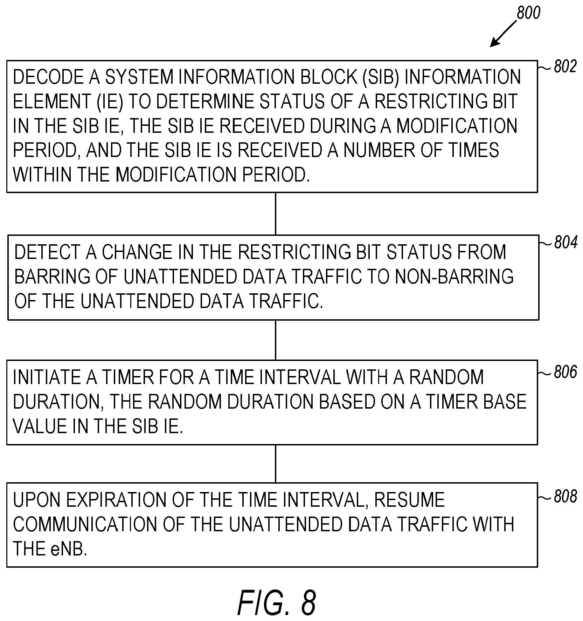

Referring to FIG. 1A and FIG. 8, the example method 800 may start at 802, when a System Information Block (SIB) information element (IE) is decoded to determine status of a restricting bit in the SIB IE. For example, the UE 102 may decode the SIB 130 to determine status of the restricting bit 131. The SIB IE 130 may be received during a modification period (e.g., 402). The SIB IE 130 may be received a number of times within the modification period 402 (e.g., as illustrated in FIG. 4). In some examples, the SIB may be transmitted (and received during a single modification period) only once, and in other examples it may be transmitted (and received) more than once in a single modification period. At 804, a change in the restricting bit status may be detected from barring of unattended data traffic to non-barring of the unattended data traffic. For example, the UE 102 may initially detect that the restricting bit 130 is set and unattended data traffic is restricted/barred. During a subsequent modification period, however, the UE may detect that the restricting bit status has changed from barring (e.g., TRUE value for the bit) to non-barring (e.g., FALSE value for the bit). At 806, a timer may be initiated for a time interval with a random duration. For example, the UE 102 may initiate a random timer using, e.g., the timer base value 132 received from the eNB. AT 808, upon expiration of the time interval, communication of the unattended data traffic may be resumed with the eNB. As illustrated in FIG. 5, the restricting bit may be an unattended data traffic (udt) Restricting bit, and the timer base value may be a udt-RestrictingTime value.

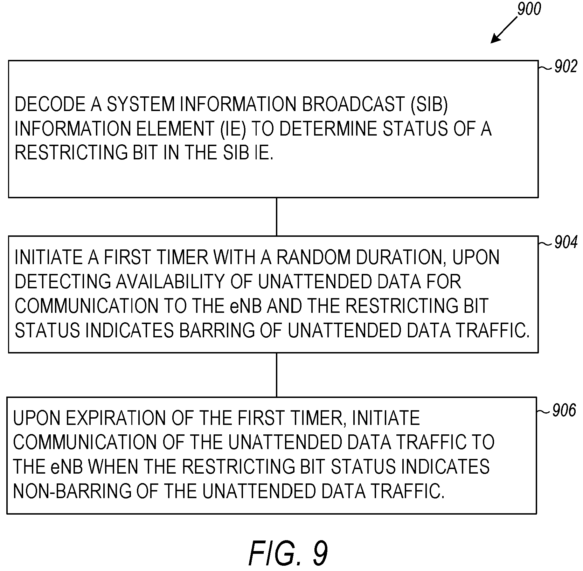

Referring to FIG. 1A and FIG. 9, the example method 900 may start at 902, when a System Information Block (SIB) information element (IE) may be decoded to determine status of a restricting bit in the SIB IE. For example, the UE 102 may receive data from the eNB (e.g., a SIB 130), and the SIB 130 may be decoded to determine status of the restricting bit 131. The SIB IE 130 may be received during a modification period (e.g., 402). The SIB IE 130 may be received a number of times within the modification period 402 (e.g., as illustrated in FIG. 4). AT 904, a first timer with a random duration may be initiated, upon detecting availability of unattended data for communication to the eNB and the restricting bit status indicates barring of unattended data traffic. For example, the UE 102 may detect that there is unattended data traffic for communication to the eNB 104. At a modification period boundary (e.g., at 406), the UE may further determine that the restricting bit 131 status indicates restricting of unattended data traffic. The UE may then initiate a timer with a random duration. At 906, upon expiration of the first timer, communication of the unattended data traffic to the eNB may be initiated, when the restricting bit status indicates non-barring of the unattended data traffic. In this regard, after expiration of the timer, the UE 102 may verify (e.g., at modification period boundary 406) that the restricting bit 131 status has changed to non-barring before proceeding with communication of the unattended data traffic to the eNB 104.

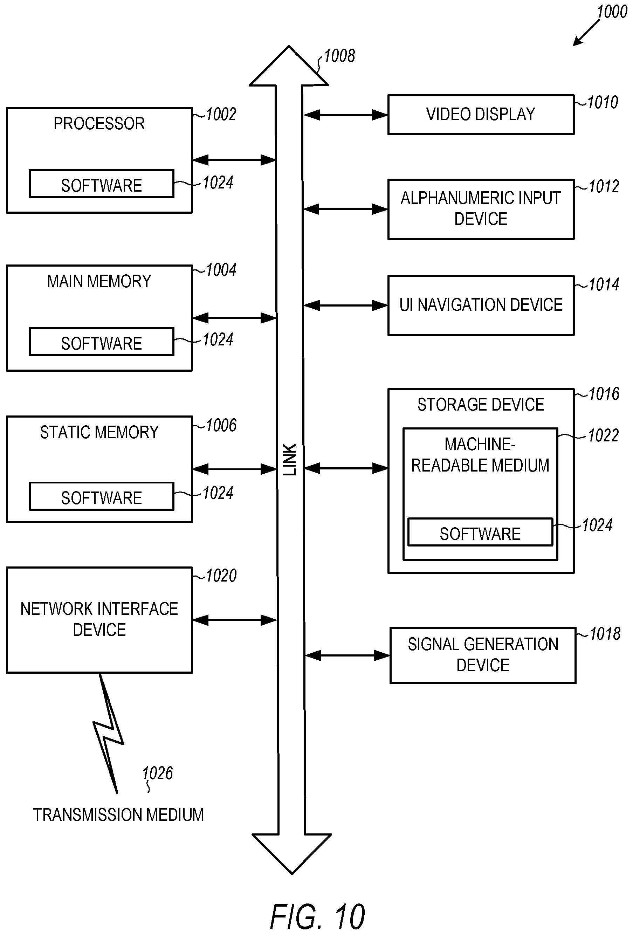

FIG. 10 illustrates a block diagram of a communication device such as an eNB or a UE, in accordance with some embodiments. In alternative embodiments, the communication device 1000 may operate as a standalone device or may be connected (e.g., networked) to other communication devices. In a networked deployment, the communication device 1000 may operate in the capacity of a server communication device, a client communication device, or both in server-client network environments. In an example, the communication device 1000 may act as a peer communication device in peer-to-peer (P2P) (or other distributed) network environment. The communication device 1000 may be a UE, eNB, PC, a tablet PC, a STB, a PDA, a mobile telephone, a smart phone, a web appliance, a network router, switch or bridge, or any communication device capable of executing instructions (sequential or otherwise) that specify actions to be taken by that communication device. Further, while only a single communication device is illustrated, the term "communication device" shall also be taken to include any collection of communication devices that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Communication device (e.g., UE) 1000 may include a hardware processor 1002 (e.g., a central processing unit (CPU), a graphics processing unit (GPU), a hardware processor core, or any combination thereof), a main memory 1004 and a static memory 1006, some or all of which may communicate with each other via an interlink (e.g., bus) 1008. The communication device 1000 may further include a display unit 1010, an alphanumeric input device 1012 (e.g., a keyboard), and a user interface (UI) navigation device 1014 (e.g., a mouse). In an example, the display unit 1010, input device 1012 and UI navigation device 1014 may be a touch screen display. The communication device 1000 may additionally include a storage device (e.g., drive unit) 1016, a signal generation device 1018 (e.g., a speaker), a network interface device 1020, and one or more sensors 1021, such as a global positioning system (GPS) sensor, compass, accelerometer, or other sensor. The communication device 1000 may include an output controller 1028, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 1016 may include a communication device readable medium 1022 on which is stored one or more sets of data structures or instructions 1024 (e.g., software) embodying or utilized by any one or more of the techniques or functions described herein. The instructions 1024 may also reside, completely or at least partially, within the main memory 1004, within static memory 1006, or within the hardware processor 1002 during execution thereof by the communication device 1000. In an example, one or any combination of the hardware processor 1002, the main memory 1004, the static memory 1006, or the storage device 1016 may constitute communication device readable media.

While the communication device readable medium 1022 is illustrated as a single medium, the term "communication device readable medium" may include a single medium or multiple media (e.g., a centralized or distributed database, and/or associated caches and servers) configured to store the one or more instructions 1024.

The term "communication device readable medium" may include any medium that is capable of storing, encoding, or carrying instructions for execution by the communication device 1000 and that cause the communication device 1000 to perform any one or more of the techniques of the present disclosure, or that is capable of storing, encoding or carrying data structures used by or associated with such instructions. Non-limiting communication device readable medium examples may include solid-state memories, and optical and magnetic media. Specific examples of communication device readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device readable media may include non-transitory communication device readable media. In some examples, communication device readable media may include communication device readable media that is not a transitory propagating signal.

The instructions 1024 may further be transmitted or received over a communications network 1026 using a transmission medium via the network interface device 1020 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 1020 may include one or more physical jacks (e.g., Ethernet, coaxial, or phone jacks) or one or more antennas to connect to the communications network 1026. In an example, the network interface device 1020 may include a plurality of antennas to wirelessly communicate using at least one of single-input multiple-output (SIMO), MIMO, or multiple-input single-output (MISO) techniques. In some examples, the network interface device 1020 may wirelessly communicate using Multiple User MIMO techniques. The term "transmission medium" shall be taken to include any intangible medium that is capable of storing, encoding or carrying instructions for execution by the communication device 1000, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims

## Claims

1. A user equipment, UE (102, 200), configured to communicate with an evolved node B, eNB, (104, 300), the UE (102, 200) comprising:
memory; and
processing circuitry coupled to the memory, the processing circuitry configured to:
decode (802) a System Information Block, SIB, information element, IE, to determine status of a restricting bit in the SIB IE as well as a timer base value in the SIB IE, the SIB IE received during a modification period from an evolved Node B, eNB, wherein the restricting bit is an unattended data traffic, udt, Restricting bit and the timer base value is a udt-RestrictingTime value determined by the eNB;
detect (804) a change in the restricting bit status from barring of unattended data traffic to non-barring of the unattended data traffic;
initiate (806), at a boundary time of the system information modification period, a timer for a time interval with a random duration, the random duration based on the udt-RestrictingTime value, in response to detecting said change from barring of unattended data traffic to non-barring of the unattended data traffic; and
upon expiration of the timer, resume (808) communication of the unattended data traffic with the eNB.

2. The UE (102, 200) of claim 1, wherein the SIB IE is a System_Information_Block_Type_2 information element.

3. The UE (102, 200) of claim 1, wherein:
a TRUE status of the restricting bit indicates the unattended data traffic is to be barred for communication by the UE (102, 200); and
a FALSE status of the restricting bit indicates the unattended data traffic is to be non-barred for communication by the UE (102, 200).

4. The UE (102, 200) of claim 3, wherein the processing circuitry is further configured to:
when the status of the restricting bit is TRUE, provide an indication to an operating system layer or an application layer of the UE (102, 200) to restrict the unattended data traffic.

5. The UE (102, 200) of claim 1, wherein the processing circuitry is further configured to:
upon expiration of the time interval, verify the restricting bit status continues to indicate non-barring of unattended data traffic; and
resume the communication of the unattended data traffic with the eNB upon successful verification.

6. The UE (102, 200) of claim 1, wherein the processing circuitry is further configured to:
upon expiration of the time interval, verify the restricting bit status continues to indicate non-barring of unattended data traffic; and
continue barring of the unattended data traffic upon unsuccessful verification.

7. The UE (102, 200) of claim 1, wherein the processing circuitry is further configured to:
receive a plurality of SIB IEs during the system information modification period, each of the plurality of SIB IEs comprising the restricting bit.

8. A computer-readable storage medium comprising instructions which, when executed by one or more processors of a user equipment, UE (102, 200), cause the one or more processors to:
decode a System Information Block, SIB, information element, IE, to determine status of a restricting bit in the SIB IE as well as a timer base value in the SIB IE, the SIB IE received during a modification period from an evolved Node B, eNB, wherein the restricting bit is an unattended data traffic, udt, Restricting bit and the timer base value is a udt-RestrictingTime value determined by the eNB;
detect a change in the restricting bit status from barring of unattended data traffic to non-barring of the unattended data traffic;
initiate, at a boundary time of the system information modification period, a timer for a time interval with a random duration, the random duration based on the udt-RestrictingTime value, in response to detecting said change from barring of unattended data traffic to non-barring of the unattended data traffic; and
upon expiration of the timer, resume communication of the unattended data traffic with the eNB.

9. The computer-readable storage medium of claim 8, wherein:
a TRUE status of the restricting bit indicates the unattended data traffic is to be barred for communication by the UE (102, 200); and
a FALSE status of the restricting bit indicates the unattended data traffic is to be non-barred for communication by the UE (102, 200).

10. The computer-readable storage medium of claim 9, wherein the instructions further cause the one or more processors to:
when the status of the restricting bit is TRUE, provide an indication to an operating system layer or an application layer of the UE (102, 200) to restrict the unattended data traffic.

## Patentansprüche

1. Benutzervorrichtung (user equipment), UE (102, 200), die konfiguriert ist, um mit einem entwickelten Knoten B, eNB, (104, 300) zu kommunizieren, wobei die UE (102, 200) Folgendes umfasst:
einen Speicher; und
eine Verarbeitungsschaltung, die mit dem Speicher gekoppelt ist, wobei die Verarbeitungsschaltung konfiguriert ist zum:
Decodieren (802) eines Systeminformationsblock-Informationselements, SIB-IE, um den Status eines Beschränkungsbits in dem SIB-IE sowie einen Zeitgeberbasiswert in dem SIB-IE zu bestimmen, wobei das SIB-IE während einer Modifikationsperiode von einem entwickelten Knoten B, eNB, empfangen wird, wobei das Beschränkungsbit ein Beschränkungsbit für unbeaufsichtigten Datenverkehr, udt, ist und der Zeitgeberbasiswert ein udt-Beschränkungszeitwert ist, der durch den eNB bestimmt wird;
Detektieren (804) einer Änderung des Beschränkungsbitstatus vom Sperren von unbeaufsichtigtem Datenverkehr zum Nicht-Sperren des unbeaufsichtigten Datenverkehrs;
Initiieren (806), zu einer Grenzzeit der Systeminformationsmodifikationsperiode, eines Zeitgebers für ein Zeitintervall mit einer zufälligen Dauer, wobei die zufällige Dauer auf dem udt-Beschränkungszeitwert basiert, als Reaktion auf das Detektieren der Änderung vom Sperren von unbeaufsichtigtem Datenverkehr zum Nicht-Sperren des unbeaufsichtigten Datenverkehrs; und
nach Ablauf des Zeitgebers, Wiederaufnehmen (808) der Kommunikation des unbeaufsichtigten Datenverkehrs mit dem eNB.

2. UE (102, 200) nach Anspruch 1, wobei das SIB-IE ein System_Information_Block_Type_2-Informationselement ist.

3. UE (102, 200) nach Anspruch 1, wobei:
ein WAHR-Status des Beschränkungsbits angibt, dass der unbeaufsichtigte Datenverkehr für die Kommunikation durch das UE (102, 200) gesperrt werden soll; und
ein FALSCH-Status des Beschränkungsbits angibt, dass der unbeaufsichtigte Datenverkehr für die Kommunikation durch das UE (102, 200) nicht gesperrt werden soll.

4. UE (102, 200) nach Anspruch 3, wobei die Verarbeitungsschaltung ferner konfiguriert ist zum:
wenn der Status des Beschränkungsbits WAHR ist, Bereitstellen einer Anzeige an eine Betriebssystemschicht oder eine Anwendungsschicht des UE (102, 200), um den unbeaufsichtigten Datenverkehr zu beschränken.

5. UE (102, 200) nach Anspruch 1, wobei die Verarbeitungsschaltung ferner konfiguriert ist zum:
nach Ablauf des Zeitintervalls, Verifizieren, dass der Beschränkungsbitstatus weiterhin das Nicht-Sperren von unbeaufsichtigtem Datenverkehr angibt; und
Wiederaufnehmen der Kommunikation des unbeaufsichtigten Datenverkehrs mit dem eNB nach erfolgreicher Verifizierung.

6. UE (102, 200) nach Anspruch 1, wobei die Verarbeitungsschaltung ferner konfiguriert ist zum:
nach Ablauf des Zeitintervalls, Verifizieren, dass der Beschränkungsbitstatus weiterhin das Nicht-Sperren von unbeaufsichtigtem Datenverkehr angibt; und
Fortsetzen des Sperrens des unbeaufsichtigten Datenverkehrs nach erfolgloser Verifizierung.

7. UE (102, 200) nach Anspruch 1, wobei die Verarbeitungsschaltung ferner konfiguriert ist zum:
Empfangen einer Vielzahl von SIB-IEs während der Systeminformationsmodifikationsperiode, wobei jedes der Vielzahl von SIB-IEs das Beschränkungsbit umfasst.

8. Computerlesbares Speichermedium, das Anweisungen umfasst, die bei Ausführung durch einen oder mehrere Prozessoren einer Benutzervorrichtung, UE (102, 200), den einen oder die mehreren Prozessoren zu Folgendem veranlassen:
Decodieren eines Systeminformationsblock-Informationselements, SIB-IE, um den Status eines Beschränkungsbits in dem SIB-IE sowie einen Zeitgeberbasiswert in dem SIB-IE zu bestimmen, wobei das SIB-IE während einer Modifikationsperiode von einem entwickelten Knoten B, eNB, empfangen wird, wobei das Beschränkungsbit ein Beschränkungsbit für unbeaufsichtigten Datenverkehr, udt, ist und der Zeitgeberbasiswert ein udt-Beschränkungszeitwert ist, der durch den eNB bestimmt wird;
Detektieren einer Änderung des Beschränkungsbitstatus vom Sperren von unbeaufsichtigtem Datenverkehr zum Nicht-Sperren des unbeaufsichtigten Datenverkehrs;
Initiieren, zu einer Grenzzeit der Systeminformationsmodifikationsperiode, eines Zeitgebers für ein Zeitintervall mit einer zufälligen Dauer, wobei die zufällige Dauer auf dem udt-Beschränkungszeitwert basiert, als Reaktion auf das Detektieren der Änderung vom Sperren von unbeaufsichtigtem Datenverkehr zum Nicht-Sperren des unbeaufsichtigten Datenverkehrs; und
nach Ablauf des Zeitgebers, Wiederaufnehmen der Kommunikation des unbeaufsichtigten Datenverkehrs mit dem eNB.

9. Computerlesbares Speichermedium nach Anspruch 8, wobei:
ein WAHR-Status des Beschränkungsbits angibt, dass der unbeaufsichtigte Datenverkehr für die Kommunikation durch das UE (102, 200) gesperrt werden soll; und
ein FALSCH-Status des Beschränkungsbits angibt, dass der unbeaufsichtigte Datenverkehr für die Kommunikation durch das UE (102, 200) nicht gesperrt werden soll.

10. Computerlesbares Speichermedium nach Anspruch 9, wobei die Anweisungen ferner den einen oder die mehreren Prozessoren zu Folgendem veranlassen:
wenn der Status des Beschränkungsbits WAHR ist, Bereitstellen einer Anzeige an eine Betriebssystemschicht oder eine Anwendungsschicht des UE (102, 200), um den unbeaufsichtigten Datenverkehr zu beschränken.

## Revendications

1. Un équipement utilisateur, UE (102, 200), configuré pour communiquer avec un nœud B évolué, eNB, (104, 300), l'UE (102, 200) comprenant :
une mémoire ; et
une circuiterie de traitement couplée à la mémoire, la circuiterie de traitement étant configurée pour :
décoder (802) un élément d'information, IE, de bloc d'information système, SIB, pour déterminer le statut d'un bit de restriction dans l'IE de SIB ainsi qu'une valeur de base de temporisation dans l'IE de SIB, l'IE de SIB étant reçu pendant une période de modification en provenance d'un nœud B évolué, eNB, dans lequel le bit de restriction est un bit de restriction de trafic de données non prises en charge, udt, et la valeur de base de temporisation est une valeur udt-RestrictingTime déterminée par l'eNB ;
détecter (804) un changement de statut du bit de restriction, d'un blocage d'un trafic de données non prises en charge à un non-blocage du trafic de données non prises en charge ;
déclencher (806), à un instant de frontière de la période de modification de l'information système, une temporisation pendant un intervalle temporel de durée aléatoire, la durée aléatoire étant basée sur la valeur udt-RestrictingTime, en réponse à la détection dudit changement du blocage d'un trafic de données non prises en charge à un non-blocage du trafic de données non prises en charge ; et
à l'expiration de la temporisation, la reprise (808) de la communication du trafic de données non prises en charge avec l'eNB.

2. L'UE (102, 200) de la revendication 1, dans lequel l'IE de SIB est un élément d'information System_Information_Block_Type_2.

3. L'UE (102, 200) de la revendication 1, dans lequel :
un statut VRAI du bit de restriction indique que le trafic de données non prises en charge doit être bloqué pour une communication par l'UE (102, 200) ; et
un statut FAUX du bit de restriction indique que le trafic de données non prises en charge doit être non-bloqué pour la communication par l'UE (102, 200).

4. L'UE (102, 200) de la revendication 3, dans lequel la circuiterie de traitement est en outre configurée pour :
lorsque le statut du bit de restriction est VRAI, délivrer une indication à une couche de système d'exploitation ou à une couche d'application de l'UE (102, 200) de restreindre le trafic de données non prises en charge.

5. L'UE (102, 200) de la revendication 1, dans lequel la circuiterie de traitement est en outre configurée pour :
à l'expiration de l'intervalle temporel, vérifier que le statut du bit de restriction continue à indiquer un non-blocage du trafic de données non prises en charge ; et
reprendre la communication du trafic de données non prises en charge avec l'eNB en cas de vérification avec succès.

6. L'UE (102, 200) de la revendication 1, dans lequel la circuiterie de traitement est en outre configurée pour :
à l'expiration de l'intervalle temporel, vérifier que le statut du bit de restriction continue à indiquer le non-blocage du trafic de données non prises en charge ; et
continuer à bloquer le trafic de données non prises en charge en cas de vérification sans succès.

7. L'UE (102, 200) de la revendication 1, dans lequel la circuiterie de traitement est en outre configurée pour : recevoir une pluralité d'IE de SIB pendant la période de modification d'information système, chacun des IE de la pluralité d'IE de SIB comprenant le bit de restriction.

8. Un support de stockage lisible par calculateur comprenant des instructions qui, lorsqu'elles sont exécutées par un ou plusieurs processeurs d'un équipement utilisateur, UE (102, 200), font en sorte que les un ou plusieurs processeurs :
décodent un élément d'information, IE, de bloc d'information système, SIB, pour déterminer le statut d'un bit de restriction dans l'IE de SIB ainsi qu'une valeur de base de temporisation dans l'IE de SIB, l'IE de SIB étant reçu pendant une période de modification en provenance d'un nœud B évolué, eNB, dans lequel le bit de restriction est un bit de restriction de trafic de données non prises en charge, udt, et la valeur de base de temporisation est une valeur udt-RestrictingTime déterminée par l'eNB ;
détectent un changement de statut du bit de restriction, d'un blocage d'un trafic de données non prises en charge à un non-blocage du trafic de données non prises en charge ;
déclenchent, à un instant de frontière de la période de modification de l'information système, une temporisation pendant un intervalle temporel de durée aléatoire, la durée aléatoire étant basée sur la valeur udt-RestrictingTime, en réponse à la détection dudit changement du blocage d'un trafic de données non prises en charge à un non-blocage du trafic de données non prises en charge ; et
à l'expiration de la temporisation, reprennent la communication du trafic de données non prises en charge avec l'eNB.

9. Le support de stockage lisible par calculateur de la revendication 8, dans lequel :
un statut VRAI du bit de restriction indique que le trafic de données non prises en charge doit être bloqué pour une communication par l'UE (102, 200) ; et
un statut FAUX du bit de restriction indique que le trafic de données non prises en charge doit être non-bloqué pour la communication par l'UE (102, 200).

10. Le support de stockage lisible par calculateur de la revendication 9, dans lequel les instructions font en outre en sorte que les un ou plusieurs processeurs :
lorsque le statut du bit de restriction est VRAI, délivrent une indication à une couche de système d'exploitation ou à une couche d'application de l'UE (102, 200) de restreindre le trafic de données non prises en charge.
